# EUROPEAN PATENT APPLICATION

(11) **EP 4 741 134 A1**
(43) Date of publication of application: **13.05.2026**
(21) Application number: 24839214.4
(22) Date of filing: 30.01.2024
(51) Int. Cl.: B29C 45/62, B22D 17/20, B29C 45/78

(54) **CYLINDER FOR INJECTION MOLDING APPARATUS, AND INJECTION MOLDING APPARATUS**

(30) Priority: 07.07.2023 JP 2023112161
(71) Applicant: The Japan Steel Works, Ltd., Tokyo 141-0032 (JP)
(72) Inventor: KUNIHIRO, Daisuke, Tokyo 141-0032 (JP)
(74) Representative: Simmons & Simmons LLP (Munich)
(86) International application number: PCT/JP2024/002796
(87) International publication number: WO 2025/013316

(57) **Abstract**

Provided is a cylinder (101) for use in an injection molding apparatus (100) into which a raw material is introduced, which heats and conveys the raw material with a screw installed therein, and which injects the molten raw material into a mold provided on the downstream side thereof. The cylinder includes heaters (102) that have cylindrical shapes concentric with the screw, that cover the outer surface of the cylinder, and that heat the cylinder. The ratio of the surface roughness Ra (µm) of the cylinder to the outer diameter (mm) of the cylinder is 0.002-0.050.

## Description

### Technical Field

The present disclosure relates to a cylinder for an injection molding apparatus and an injection molding apparatus.

### Background Art

An injection molding apparatus, in which thermal efficiency of heaters is improved, has been developed. Patent Literature 1 describes that a converter of an electric injection molding machine is configured of a PWM converter equipped with a reactor. Such a PWM converter rectifies and boosts a three-phase AC voltage from the outside to convert it into a predetermined primary DC voltage. Thus converted primary DC voltage is supplied to a servo amplifier for driving the servomotor. A chopper circuit is connected to a voltage line of the primary DC voltage, and a secondary DC voltage is obtained by increasing the primary DC voltage. The power from the secondary DC voltage is supplied to the heaters of the electric injection molding machine.

### Citation List

### Patent Literature

Patent Literature 1: Japanese Unexamined Patent Application Publication No. 2013-223975

### Summary of Invention

### Technical Problem

However, the way of improving thermal efficiency of the heaters described in Patent Literature 1 causes change in the power supply method and such improvement in thermal efficiency was not due to the structure of the injection molding apparatus. Therefore, an object of the present disclosure is to provide a cylinder for an injection molding apparatus in which thermal efficiency of heaters is improved by elaborating the structure of the injection molding apparatus, in particular, the structure of the cylinder.

Other problems and new features will become apparent from the present description and the accompanying drawings.

### Solution to Problem

According to an aspect of an embodiment, by adjusting a surface roughness of a cylinder, adhesion between the cylinder and heaters can be improved and heat conduction efficiency of the heaters can be improved.

### Advantageous Effects of Invention

According to an aspect of an embodiment, it is possible to provide a cylinder for an injection molding apparatus in which thermal efficiency of heaters is improved by elaborating the structure of the injection molding apparatus, in particular, the structure of the cylinder.

### Brief Description of Drawings

Fig. 1 is a schematic view of an injection molding apparatus according to an embodiment;
Fig. 2 is a schematic view of a cylinder and heaters of the injection molding apparatus according to the embodiment;
Fig. 3 is a cross-sectional view of the cylinder of the injection molding apparatus according to the embodiment;
Fig. 4 is a diagram showing an example of an average power of heaters and an average power of a motor of a related injection molding apparatus;
Fig. 5 is a diagram showing a relationship between the surface roughness and the heating-up time of the cylinder of the injection molding apparatus according to the embodiment; and
Fig. 6 is a diagram showing a relationship between the surface roughness and the surface area of the cylinder according to the embodiment.

### Description of Embodiments

### Embodiment

Hereinafter, embodiments of the present disclosure will be described with reference to the drawings. However, the disclosure as claimed is not limited to the following embodiments. In addition, not all of the structures described in the embodiments are necessary as means for solving the problem. In order to clarify the explanation, the following descriptions and drawings are omitted and simplified as appropriate. In each drawing, the same reference numerals are assigned to the same elements, and duplicate explanations are omitted as necessary.

### (Explanation of injection molding apparatus according to embodiment)

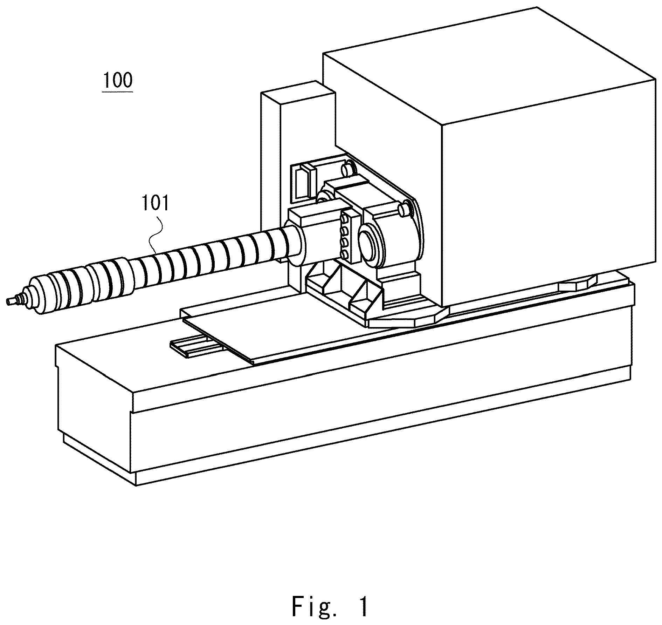

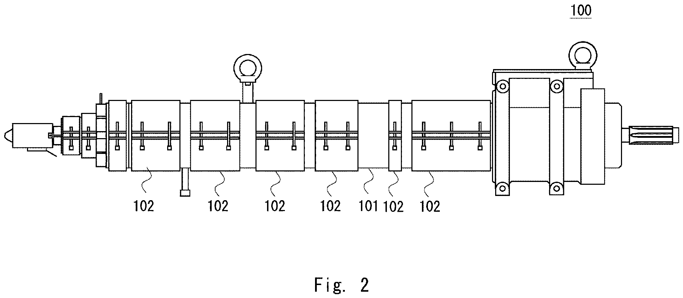

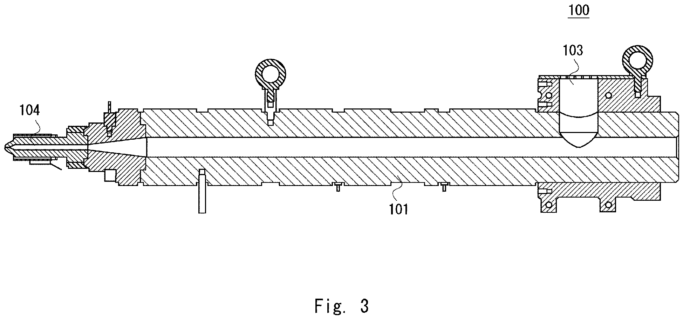

Fig. 1 is a schematic view of an injection molding apparatus according to an embodiment. Fig. 2 is a schematic view of a cylinder and heaters of the injection molding apparatus according to the embodiment. Fig. 3 is a cross-sectional view of the cylinder of the injection molding apparatus according to the embodiment. Referring to Figs. 1 to 3, the injection molding apparatus according to the embodiment will be described. An injection molding apparatus according to the embodiment is a machine for heating and melting a raw material, such as an unmolded product including resin, and injecting the heated and melted raw material into a mold to thereby form a molded product.

As shown in Figs. 1 to 3, an injection molding apparatus 100 includes a cylinder 101 and heaters 102. The injection molding apparatus 100 is configured to send the raw material to a tip 104 of the cylinder 101 to be injected. Thus injected raw material is then injected into the mold, whereby a molded product is formed.

As shown in Fig. 3, the cylinder 101 has a hollow cylindrical shape and a screw (not shown) is disposed therein, the screw being arranged coaxially with the outer surface of the cylinder. The raw material is introduced from a hopper 103 into the cylinder 101 and is conveyed by the rotation of the screw. The raw material is heated and melted in the cylinder 101. By the rotation of the screw, the raw material is kneaded and plasticized and then extruded from the rear part of the hopper 103 toward the tip 104. By the rotation of the screw and the retraction of the screw, the raw material is caused to accumulate on the downstream side of the screw, and is injected from the tip 104 of the cylinder by the injecting operation of the screw. That is, the plasticized raw material is injected toward the mold by causing the screw to advance and retract.

As shown in Fig. 2, a plurality of the heaters 102 for heating configured to heat the cylinder 101 are wound and attached to the cylinder 101 so as to cover the circumference of the cylinder 101. The heaters 102 can heat the cylinder 101 up to 650°C. The raw material in the cylinder 101 is heated and melted by the heat generated by the heaters 102. The heaters 102 are preferably a band heater, but is not limited thereto, and may be any heater of a contact-heating type configured to heat the cylinder 101 by being brought in contact with the cylinder 101. For example, a cartridge heater, a cast heater, a space heater, or a silicon rubber heater can be employed as the heaters 102.

### (Description of surface roughness of cylinder according to embodiment)

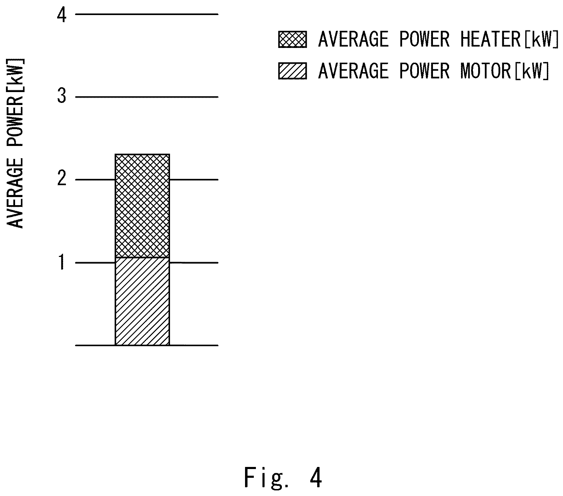

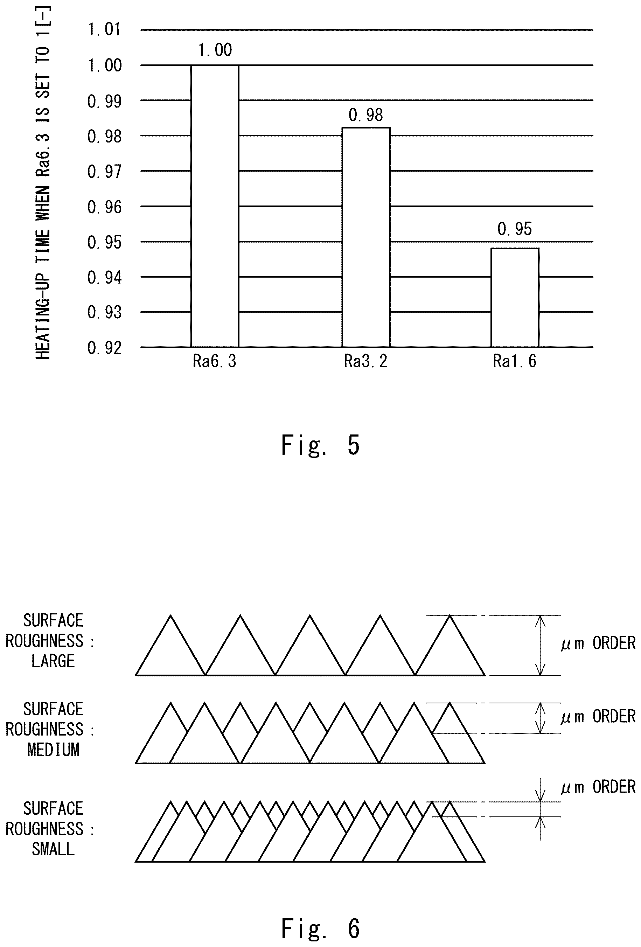

Fig. 4 is a diagram showing an example of an average power of heaters and an average power of a motor of a related injection molding apparatus. Fig. 5 is a diagram showing a relationship between the surface roughness and the heating-up time of the cylinder of the injection molding apparatus according to the embodiment. Fig. 6 is a diagram showing a relationship between the surface roughness and the surface area of the cylinder according to the embodiment. Referring to Figs. 4 to 6, the surface roughness of the cylinder according to the embodiment will be described.

As shown in Fig. 4, the power consumed by the heaters is approximately equal to the power consumed by the motor in the related injection molding apparatus. Therefore, reducing the power consumed by the heaters can significantly reduce the power consumed by the injection molding apparatus.

As shown in Fig. 5, in the case where the surface roughness Ra (µm) of the cylinder 101 was changed from 6.3 to 3.2 and 1.6, the heating-up time was shortened from 1 to 0.98 and 0.95. That is, the thermal efficiency of the heaters has improved. Furthermore, the thermal efficiency was improved by changing the surface roughness Ra (µm) to 0.8.

As shown in Fig. 6, it is considered that the reason why the thermal efficiency of the heaters is improved in the case where the surface roughness Ra is reduced is that the vertices of unevenness become smaller as Ra is reduced. That is, the surface area of the heaters 102 with which the cylinder is brought in contact is increased as the surface unevenness of the cylinder 101 is reduced. Therefore, the heat conduction efficiency from the heaters 102 to the cylinder 101 can be improved by improving the adhesion between the cylinder 101 and the heaters 102.

As regards the surface roughness Ra of the cylinder 101, the range is settable based on the outer diameter of the cylinder. In the case where the outer diameter of the cylinder is equal to or smaller than 100 mm, machining can be performed at such an accuracy that the ratio of the surface roughness Ra (µm) of the cylinder to the outer diameter (mm) of the cylinder is 0.008 to 0.050. In the case where the outer diameter of the cylinder is larger than 100 mm and equal to or smaller than 200 mm, machining can be performed at such an accuracy that the ratio of the surface roughness Ra (µm) of the cylinder to the outer diameter (mm) of the cylinder is 0.004 to 0.030. In the case where the outer diameter of the cylinder is larger than 200 mm and equal to or smaller than 300 mm, machining can be performed at such an accuracy that the ratio of the surface roughness Ra (µm) of the cylinder to the outer diameter (mm) of the cylinder is 0.002 to 0.020. Further, in the case where the outer diameter of the cylinder is larger than 300 mm, machining can be performed at such an accuracy that the ratio of the surface roughness Ra (µm) of the cylinder to the outer diameter (mm) of the cylinder is 0.002 to 0.009. Thus, in the case where surface machining is performed by varying the diameter of the cylinder 101, machining can be performed at such an accuracy that the ratio of the surface roughness Ra (µm) of the cylinder to the outer diameter of the cylinder is 0.002 to 0.050.

As described above, the above configuration provides a cylinder for an injection molding apparatus in which thermal efficiency of heaters is improved by elaborating the structure of the injection molding apparatus, in particular, the structure of the cylinder. By improving the thermal efficiency of the heaters, the power consumed by the injection molding apparatus can be reduced.

It should be noted that the present disclosure is not limited to any of the embodiments described above, and may be appropriately modified without departing from the gist of the present disclosure.

This application claims priority based on Japanese Patent Application 2023-112161, filed on July 7, 2023, and the entire disclosure thereof is incorporated herein.

### Reference Signs List

100 INJECTION MOLDING APPARATUS, 101 CYLINDER, 102 HEATER, 103 HOPPER, 104 TIP

## Claims

1. A cylinder for an injection molding apparatus configured to have a raw material introduced therein, convey the raw material while heating the raw material by a screw disposed inside the cylinder, and inject the melted raw material to a mold located on a downstream side of the apparatus, the cylinder having a cylindrical shape and arranged coaxially with the screw, comprising:
heaters covering an outer surface of the cylinder and configured to heat the cylinder,
wherein a ratio of a surface roughness Ra (µm) of the cylinder to an outer diameter (mm) of the cylinder is 0.002 to 0.050.

2. The cylinder for the injection molding apparatus according to claim 1, wherein the surface roughness Ra (µm) of the cylinder is 0.8 to 3.2.

3. The cylinder for the injection molding apparatus according to claim 1, wherein the heaters are a band heater, a cartridge heater, a cast heater, a space heater, or a silicon rubber heater.

4. The cylinder for the injection molding apparatus according to claim 1, wherein the heaters are configured to heat the cylinder up to 650°C.

5. The cylinder for the injection molding apparatus according to any one of claims 1 to 4, wherein the ratio of the surface roughness Ra (µm) of the cylinder to the outer diameter (mm) of the cylinder is 0.008 to 0.050 in the case where the outer diameter of the cylinder is equal to or smaller than 100 mm.

6. The cylinder for the injection molding apparatus according to any one of claims 1 to 4, wherein the ratio of the surface roughness Ra (µm) of the cylinder to the outer diameter (mm) of the cylinder is 0.004 to 0.030 in the case where the outer diameter of the cylinder is larger than 100 mm and equal to or smaller than 200 mm.

7. The cylinder for the injection molding apparatus according to any one of claims 1 to 4, wherein the ratio of the surface roughness Ra (µm) of the cylinder to the outer diameter (mm) of the cylinder is 0.002 to 0.020 in the case where the outer diameter of the cylinder is larger than 200 mm and equal to or smaller than 300 mm.

8. The cylinder for the injection molding apparatus according to any one of claims 1 to 4, wherein the ratio of the surface roughness Ra (µm) of the cylinder to the outer diameter (mm) of the cylinder is 0.002 to 0.009 in the case where the outer diameter of the cylinder is larger than 300 mm.

9. An injection molding apparatus comprising:
a cylinder having heaters for heating attached to an outer surface thereof; and
a screw provided inside the cylinder and arranged coaxially with the outer surface of the cylinder,
wherein a raw material is kneaded and plasticized by rotating the screw, and then the plasticized raw material is injected to a mold by causing the screw to advance and retract, and
wherein a ratio of a surface roughness Ra (µm) of the cylinder to an outer diameter (mm) of the cylinder is 0.002 to 0.050.
